# EUROPEAN PATENT APPLICATION

(11) **EP 4 372 670 A1**
(43) Date of publication of application: **22.05.2024**
(21) Application number: 23205815.6
(22) Date of filing: 25.10.2023
(51) Int. Cl.: G06T 3/4046, G06T 3/4053

(54) **SUPER-RESOLUTION SYSTEM MANAGEMENT USING ARTIFICIAL INTELLIGENCE FOR GAMING APPLICATIONS**

(30) Priority: 01.11.2022 US 202263381768 P; 24.10.2023 US 202318492836
(71) Applicant: MediaTek Inc., 30078 Hsinchu City (TW)
(72) Inventor: LIN, Chien-Nan, Hsinchu City (TW); TSAO, You-Ming, Hsinchu City (TW); CHU, Yung-Hsin, Hsinchu City (TW); WANG, An-Li, Hsinchu City (TW)
(74) Representative: Hoefer & Partner Patentanwälte mbB

(57) **Abstract**

A computing system (100) performs artificial-intelligence, Al, super-resolution, SR. The computing system (100) includes multiple processors (110), which further includes a graphics processing unit, GPU, (112) and an AI processing unit, APU, (113). The computing system (100) also includes a memory (120) to store AI models (125). When detecting an indication that the loading of the GPU (112) exceeds a threshold, the processors (110) reduce the resolution of a video output from the GPU (112) in response to the indication. One of the AI models is selected based on graphics scenes in the video and the respective power consumption estimates of the AI models (125). The processors (110) then perform AI SR operations on the video using the selected AI model to restore the resolution of the video for display.

## Description

### CROSS-REFERENCE TO RELATED APPLICATIONS

This application claims the benefit of U.S. Provisional Application No. 63/381,768 filed on November 1, 2022, the entirety of which is incorporated by reference herein.

### TECHNICAL FIELD

Embodiments of the invention relate to a system that dynamically performs super-resolution operations using artificial intelligence (AI) models while maintaining or optimizing the system power consumption.

### BACKGROUND OF THE INVENTION

As modern mobile games increasingly emphasize high frame rates and high resolution, the demand for hardware processing capability has also greatly increased. In particular, the processing capability of a graphic processing unit (GPU) can directly affect a user's gaming experience. The increased hardware processing requirement causes increased power consumption. However, an end user's device typically has limited cooling capacity. The heat generated from the increased power consumption can adversely affect the performance of each processor, resulting in a poor gaming experience.

Some heavy-loading games cannot maintain a sustainable or consistent frame per second (FPS) output due to thermal control and performance throttling. The unstable FPS can degrade end users' gaming experience; for example, after playing a game for a while, the interaction between the user and the game may become unsmooth due to missing frames.

A video game may freeze when the gaming device encounters performance bottlenecks, which can be caused by excessive load on the processors. Reducing excessive processor loading not only reduces the performance bottlenecks but also lowers system power consumption. However, the reduction in processor loading can cause performance degradation such as degradation of picture quality. Thus, there is a need for improving the management of power consumption, processing loading, and picture quality.

### SUMMARY OF THE INVENTION

A method and a computing system according to the invention are defined in the independent claims. The dependent claims define preferred embodiments thereof. In one embodiment, a method is provided for performing artificial-intelligence (Al) super-resolution (SR). The method comprises the step of detecting an indication that loading of a graphics processing unit (GPU) in a computing system exceeds a threshold. The method also comprises the step of reducing the resolution of a video output from the GPU in response to the indication. The method further comprises the step of selecting an AI model among multiple AI models based on graphics scenes in the video and the respective power consumption estimates of the AI models, and the step of performing AI SR operations on the video using the selected AI model to restore the resolution of the video for display.

In another embodiment, a computing system is operative to perform AI SR. The computing system includes processors, which further includes a GPU and an AI processing unit (APU). The computing system further includes a memory to store AI models. The processors are operative to detect an indication that loading of the GPU exceeds a threshold, and reduce the resolution of a video output from the GPU in response to the indication. The processors are further operative to select one of the AI models based on graphics scenes in the video and the respective power consumption estimates of the AI models, and perform AI SR operations on the video using the selected AI model to restore the resolution of the video for display.

Other aspects and features will become apparent to those ordinarily skilled in the art upon review of the following description of specific embodiments in conjunction with the accompanying figures.

### BRIEF DESCRIPTION OF DRAWINGS

The present invention is illustrated by way of example, and not by way of limitation, in the figures of the accompanying drawings in which like references indicate similar elements. It should be noted that different references to "an" or "one" embodiment in this disclosure are not necessarily to the same embodiment, and such references mean at least one. Further, when a particular feature, structure, or characteristic is described in connection with an embodiment, it is submitted that it is within the knowledge of one skilled in the art to effect such feature, structure, or characteristic in connection with other embodiments whether or not explicitly described.
FIG. 1 is a diagram of a computing system according to one embodiment.
FIG. 2 is a flow diagram illustrating a process performed by a performance-and-power (PaP) manager according to one embodiment.
FIG. 3 illustrates an example of system operations when an AI super-resolution (SR) engine is turned on according to one embodiment.
FIG. 4 is a block diagram illustrating a method performed by an AI SR engine according to one embodiment.
FIG. 5 is a flow diagram illustrating a method of a computing system operative to perform AI SR according to one embodiment.

### DETAILED DESCRIPTION OF THE INVENTION

In the following description, numerous specific details are set forth. However, it is understood that embodiments of the invention may be practiced without these specific details. In other instances, well-known circuits, structures, and techniques have not been shown in detail in order not to obscure the understanding of this description. It will be appreciated, however, by one skilled in the art, that the invention may be practiced without such specific details. Those of ordinary skill in the art, with the included descriptions, will be able to implement appropriate functionality without undue experimentation.

Embodiments of the invention manage artificial intelligence (AI)-based super resolution (SR) operations on a sequence of graphics frames to reduce power consumption without degrading users' perception of picture and video quality. The AI SR management enables a computing system to extend the runtime of a graphics-intensive application (e.g., a video game) while maintaining the performance of the application.

The term "video" as used herein refers to a sequence of graphics frames such as a video game. The term "real-time" as used herein refers to the time when a graphics user application such as a video game is rendered and displayed; e.g., when a video game is being played by a user. The term "performance" herein encompasses video game attributes such as stability of frame per second (FPS), resolution, picture quality such as smoothness of a gaming sequence, color, distortion, light, blurring, noise, etc., in a graphics scene.

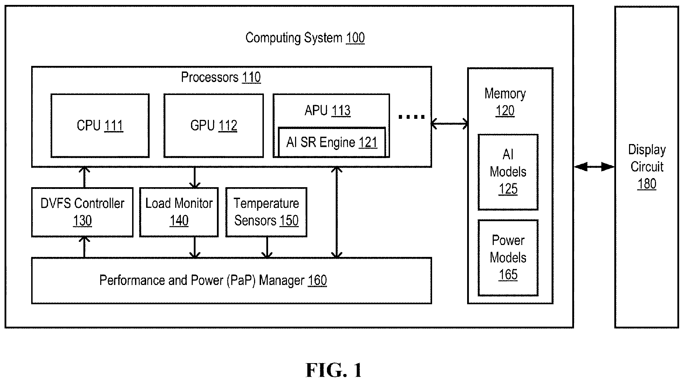

FIG. 1 illustrates an example of a computing system 100 according to one embodiment. In this example, the computing system 100 includes multiple processors 110 such as a central processing unit (CPU) 111, a graphics processing unit (GPU) 112, an AI processing unit (APU) 113, and other general-purpose and/or special-purpose processing circuitry. CPU 111 may further include multiple cores. Processors 110 may render a video game including a sequence of graphics scenes such as gaming scenes. Computing system 100 also includes a dynamic voltage frequency scaling (DVFS) controller 130 to control the voltage and operating frequency of processors 110, a load monitor 140 to monitor the processor loading, and temperature sensors 150 to monitor the internal (e.g., processor circuit board) and surface temperatures of computing system 100. APU 113 may include an AI SR engine 121 to perform SR operations based on an AI model. Preferably, AI SR engine 121 may receive a video frame with low resolution (e.g., 720 x 480 pixels) and perform SR operations to scale up the video frame to a higher resolution (e.g., 3840 x 2160 pixels) for display.

Computing system 100 further includes a power-and-performance (PaP) manager 160 to manage the activation and deactivation of AI SR engine 121 (i.e., turning on and off AI SR engine 121). Preferably, PaP manager 160 may estimate the power consumption of processors 110 based on the current processor loading from load monitor 140 and the expected computation load based on the complexity of the graphics scenes. PaP manager 160 compares the estimated power consumption with a system power budget. The system power budget, also referred to as "power budget," may change over time when the operating temperature changes. As used herein, each of the terms "temperature" and "operating temperature" refers to the temperature of the processor circuit board, the surface temperature of the system (e.g., the temperature of a device cover), or a combination of both.

Preferably, when detecting that GPU 112 loading may exceed a threshold, PaP manager 160 may direct GPU 112 to lower the resolution of its output frames to reduce the GPU usage and memory bus bandwidth. PaP manager 160 may further activate AI SR engine 121 to restore the resolution in real-time. The operations of AI SR engine 121 can increase the power consumption of computing system 100. However, it may be worthwhile to activate AI SR engine 121 as long as the GPU loading reduction saves more power than the power consumed by AI SR engine 121.

Preferably, PaP manager 160 may obtain or estimate real-time power consumption from hardware power meters, software algorithms, and/or power models, etc. Preferably, PaP manager 160 may estimate the power consumption from processor loading statistics, number of instructions per second, bandwidth, temperature, etc. Preferably, PaP manager 160 uses power models 165 to estimate the power consumption based on processor loading. PaP manager 160 may also use power models 165 to estimate the change in power consumption when the operating temperature changes. Power models 165 help PaP manager 160 to determine whether the power consumption is below or above the power budget, and whether AI SR engine 121 can be activated without exceeding the power budget.

AI SR engine 121 and PaP manager 160 may be implemented by general-purpose or specialized hardware, software, firmware, or a combination of hardware and software. Preferably, a deep-learning accelerator (DLA) in APU 113 may perform the operations of AI engine 121. Preferably, one or more processors 110 may perform the operations of PaP manager. Computing system 100 is coupled to a display circuit 180 (e.g., a liquid crystal module or the like) for displaying images and video output from computing system 100.

Preferably, power models 165 may be stored in a memory 120. Memory 120 may include one or more of a dynamic random-access memory (DRAM) device, a static RAM (SRAM) device, a flash memory device, and/or other volatile or non-volatile memory devices. Preferably, memory 120 stores multiple AI models 125 in addition to power models 165. Although memory 120 is shown as one block in FIG. 1, it is understood that memory 120 may include multiple memory devices at multiple memory hierarchies.

Preferably, AI models 125 have been trained for image enhancement including super-resolution. The complexity of the AI models 125; e.g., the total count of nodes in each AI model, may be used to estimate their respective power consumption. An example of AI model 125 may include a convolutional neural network (CNN), machine-learning networks, and/or other types of neural networks.

Computing system 100 may be embodied in many form factors, such as a computer system, a gaming device, a smartphone, a mobile device, a handheld device, a wearable device, an entertainment system, and the like. It is understood that computing system 100 is simplified for illustration; additional hardware and software components are not shown.

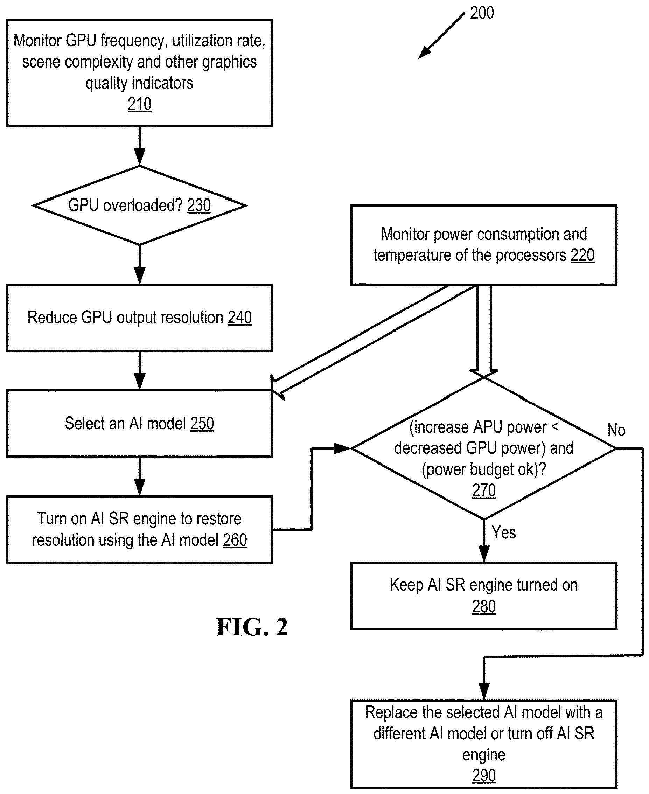

FIG. 2 is a flow diagram illustrating a process 200 performed by PaP manager 160 (FIG. 1) according to one embodiment. FIG. 2 shows some of the factors considered by PaP manager 160 in determining whether to activate or deactivate AI SR operations. Referring also to FIG. 1, through the use of load monitor 140 and other monitoring hardware and software, PaP manager 160 at step 210 monitors the operating frequency and utilization rate of GPU 112, graphics scene complexity, and other graphics quality indicators (e.g., unstable FPS). The monitoring may be performed continuously or periodically. Based on the data collected from the monitoring, PaP manager 160 at step 230 may detect that GPU 112 is overloaded. In response to the detection, PaP manager 160 may request GPU 112 to reduce its output resolution at step 240. Concurrently with step 210, PaP manager 160 at step 220 further monitors the power consumption and the temperature of computing system 100 through the use of temperature sensors 150 and power models 165. When the temperature increases and enters a predetermined high temperature range, the system's power budget, as well as the power consumption, may need to be reduced. PaP manager 160 selects an AI model at step 250 based on the graphics scenes in the video to be displayed, as different AI models may be suited for different types of graphics scenes. The selection of the AI model may be further based on the estimated power required by the AI model, which may be indicated by the number of operations required by the AI model. In an embodiment where the AI model is a neural network, the power required by the AI model may be indicated by the number of neural network nodes in the AI model.

At step 260, PaP manager 160 turns on (i.e., activates) AI SR engine 121 to restore the resolution of GPU's output using the selected AI model. PaP manager 160 then determines whether there is any power benefit in reducing the GPU power consumption at the expense of increased APU power consumption. More specifically, at step 270, if the increased APU power consumption is less than the reduced GPU power consumption and the total power consumption of the processors does not exceed the power budget, AI SR engine 121 stays activated at step 280; that is, AI SR engine 121 continues to perform SR operations on the GPU's output using the AI model selected at step 250. If, at step 270, there is no power benefit in using the selected AI model or the power budget is exceeded, PaP manager 160 at step 290 may replace the AI model with a different AI model or turn off AI SR engine 121. The monitoring at steps 210 and 220 continues, and PaP manager 160 in real-time re-examines whether to switch on or off AI SR engine 121 based on the monitoring output.

Preferably, when turning off AI SR cannot satisfy the power budget constraint, PaP manager 160 may signal DVFS controller 130 to reduce the operating frequency of processors 110. The frequency reduction may be performed step by step until the estimated power consumption is within the power budget.

Preferably, computing system 100 may maintain a whitelist, indicating which functions of which graphics scene are to be activated and/or prioritized. The whitelist specifies the configurations of functions that are used in rendering the graphics scenes in the video. The whitelist provides each function for each game scene with independent settings and parameter configurations. AI SR engine 121 may perform AI SR operations based on the whitelist.

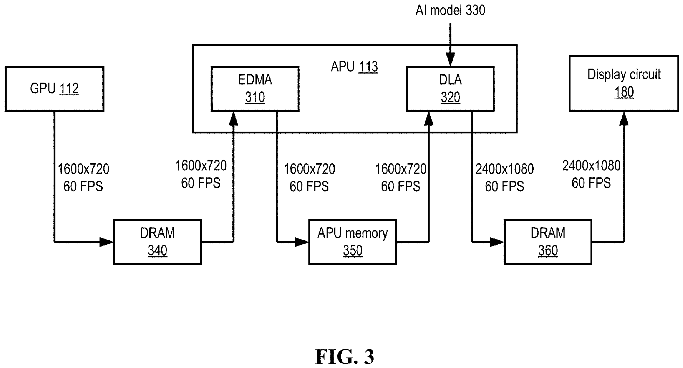

FIG. 3 illustrates an example of system operations when an AI SR engine is turned on according to one embodiment. It should be understood that the values of the resolutions in FIG. 3 are illustrated to show the changes (e.g., increase or decrease) in resolution; different resolution values may be used in alternative embodiments. Referring also to the embodiment in FIG. 1, in this example the operation of AI SR engine 121 is performed by a deep learning accelerator 320 in APU 113. GPU 112 performs rendering operations, post-processing, and user-interface (UI) operations. To reduce GPU workload, GPU 112 renders each frame in a reduced resolution, e.g., 1600 x 720 pixels resolution. The pixel data is compressed and stored in a system memory; e.g., DRAM 340. APU 114 includes an enhanced direct memory access (EDMA) 310, which retrieves the pixel data in the reduced resolution and stores it in an APU memory 350 (e.g., a tightly-coupled memory (TCM)). DLA 320 retrieves the pixel data in the reduced resolution, and performs AI SR operations using an AI model 330 to output the pixel data in a higher resolution (e.g., 2400 x 1080). AI model 330 may be one of AI models 125 in FIG. 1. The FPS stays unchanged (e.g., at 60) in this non-limitng example for power saving. In an alternative scenario where performance has higher priority over power saving, the FPS may be increased to maximize performance. The pixel data in this higher resolution undergoes frame composition and is then output to display circuit 180. DLA 320 continues the AI SR operations when the operations result in overall power saving without exceeding the power budget.

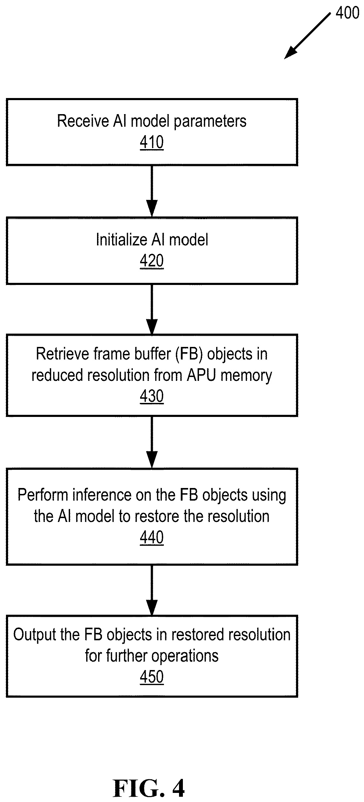

FIG. 4 is a block diagram illustrating a method 400 performed by an AI SR engine according to one embodiment. Method 400 may be performed by AI SR engine 121 in FIG. 1, which may run on DLA 320 and APU 113 in FIG. 3. Method 400 is performed in real-time; e.g., when a user application (e.g., a game) is running. Referring also to FIG. 3, method 400 starts at step 410 when AI SR engine 121 receives the parameters of the AI model selected by PaP manager 160. At step 420, AI SR engine 121 initializes the AI model with the parameters. At step 430, AI SR engine 121 retrieves frame buffer objects from APU memory 350. The frame buffer objects are graphics objects generated by GPU 112 in a reduced resolution. At step 440, AI SR engine 121 performs inference on the frame buffer object using the AI model to restore the resolution. At step 450, AI SR engine 121 outputs the frame buffer objects in the restored (i.e., higher) resolution for further operations. The frame buffer objects are then composed into a frame for display.

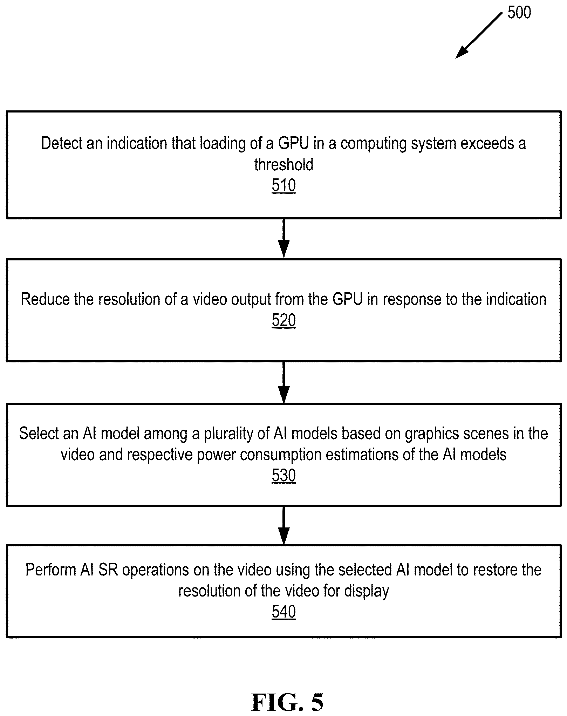

FIG. 5 is a flow diagram illustrating a method 500 of a computing system operative to perform AI SR. Preferably, method 500 may be performed by a computing system such as computing system 100 in FIG. 1.

Method 500 starts with step 510 in which the computing system detects an indication that the loading of a GPU in the computing system exceeds a threshold. In response to the indication, the computing system reduces the resolution of a video output from the GPU at step 520. The computing system at step 530 selects an AI model among multiple AI models based on graphics scenes in the video and the respective power consumption estimates of the AI models. The computing system (more specifically, an AI SR engine, DLA, or an APU) at step 540 performs AI SR operations on the video using the selected AI model to restore the resolution of the video for display.

Preferably, the increased system power consumption caused by the selected AI model is estimated to be less than reduced system power consumption caused by the reduced resolution. The AI model may represent a neural network. Each power consumption estimate may be based on a total count of nodes in the neural network represented by the AI model. Preferably, the FPS of the video is maintained for power saving. When system performance is prioritized over power saving, the FPS of the video may be increased without exceeding a power budget of the computing system.

Preferably, the computing system includes sensors and monitors to detect the temperature and power consumption of the processors in the computing system. The selected AI model may be replaced with a different one of the AI models for the AI SR operations such that the power consumption stays within a power budget at the detected temperature. This different AI model may be selected based on power consumption estimates of the AI models and a power budget surplus of the computing system. Preferably, the AI SR operations on the video may be deactivated when the power consumption reaches or exceeds a power budget at the detected temperature.

Preferably, the indication of an increase in loading of the GPU is detected from an increase in graphics scene complexity in the video. Alternatively or additionally, the indication of the loading of the GPU is detected from one or more of: an operating frequency of the GPU, a utilization rate of the GPU, or unstable FPS of the video.

Preferably, the APU of the computing system performs the AI SR operations according to a whitelist that specifies a configuration of a plurality of functions used in rendering a plurality of graphics scenes in the video.

The operations of the flow diagrams of FIG. 2, FIG. 4, and FIG. 5 have been described with reference to the exemplary embodiment of FIG. 1. However, it should be understood that the operations of the flow diagrams of FIG. 2, FIG. 4, and FIG. 5 can be performed by embodiments of the invention other than the embodiment of FIG. 1, and the embodiment of FIG. 1 can perform operations different than those discussed with reference to the flow diagrams. While the flow diagrams of FIG. 2, FIG. 4, and FIG. 5 show a particular order of operations performed by certain embodiments of the invention, it should be understood that such order is exemplary (e.g., alternative embodiments may perform the operations in a different order, combine certain operations, overlap certain operations, etc.).

Various functional components or blocks have been described herein. As will be appreciated by persons skilled in the art, the functional blocks will preferably be implemented through circuits (either dedicated circuits or general-purpose circuits, which operate under the control of one or more processors and coded instructions), which will typically comprise transistors that are configured in such a way as to control the operation of the circuitry in accordance with the functions and operations described herein.

While the invention has been described in terms of several embodiments, those skilled in the art will recognize that the invention is not limited to the embodiments described, and can be practiced with modification and alteration within the scope of the appended claims. The description is thus to be regarded as illustrative instead of limiting.

## Claims

1. A method for performing artificial-intelligence, in the following also referred to as Al, super-resolution, in the following also referred to as SR, comprising:
detecting an indication that loading of a graphics processing unit, in the following also referred to as GPU, in a computing system exceeds a threshold (510);
reducing resolution of a video output from the GPU in response to the indication (520);
selecting an AI model among a plurality of AI models based on graphics scenes in the video and respective power consumption estimates of the AI models (530); and
performing AI SR operations on the video using the selected AI model to restore the resolution of the video for display (540).

2. A computing system (100) operative to perform artificial-intelligence, in the following also referred to as AI, super-resolution, in the following also referred to as SR, comprising:
a plurality of processors (110) including a graphics processing unit, in the following also referred to as GPU, (112) and an AI processing unit, in the following also referred to as APU, (113); and
a memory (120) to store a plurality of AI models (125), wherein the processors (110) are operative to:
detect an indication that loading of the GPU (112) exceeds a threshold;
reduce resolution of a video output from the GPU (112) in response to the indication;
select an AI model among the plurality of AI models (125) based on graphics scenes in the video and respective power consumption estimates of the AI models (125); and
perform AI SR operations on the video using the selected AI model to restore the resolution of the video for display.

3. The method of claim 1 or the computing system (100) of claim 2, wherein increased system power consumption caused by the selected AI model is estimated to be less than reduced system power consumption caused by the reduced resolution.

4. The method of claim 1 or 3, or the computing system (100) of claim 2 or 3, wherein each power consumption estimate is based on a total count of nodes in a neural network represented by the AI model.

5. The method of any one of claims 1, 3 and 4, further comprising:
maintaining the frames per second, in the following also referred to as FPS, of the video for power saving, and
increasing the FPS of the video without exceeding a power budget of the computing system when system performance is prioritized over power saving; or
the computing system (100) of any one of claims 2 to 4, wherein the processors (110) are operative to:
maintain the FPS of the video for power saving; and
increase the FPS of the video without exceeding a power budget of the computing system when system performance is prioritized over power saving.

6. The method of any one of claims 1 and 3 to 5, further comprising:
detecting a temperature and power consumption of processors in the computing system, and
replacing the selected AI model with a different one of the AI models for the AI SR operations such that the power consumption stays within a power budget at the detected temperature; or
the computing system (100) of any one of claims 2 to 5, wherein the processors (110) are operative to:
detect a temperature and power consumption of processors in the computing system; and
replace the selected AI model with a different one of the AI models for the AI SR operations such that the power consumption stays within a power budget at the detected temperature.

7. The method or the computing system (100) of claim 6, wherein the different AI model is selected based on power consumption estimates of the AI models and a power budget surplus of the computing system.

8. The method of any one of claims 1 and 3 to 7, further comprising:
detecting a temperature and power consumption of processors in the computing system, and
deactivating the AI SR operations on the video when the power consumption reaches or exceeds a power budget at the detected temperature; or
the computing system (100) of any one of claims 2 to 7, further comprising temperature sensors (150) to detect a temperature and power consumption of in processors (110) the computing system, wherein the AI SR operations on the video are deactivated when the power consumption reaches or exceeds a power budget at the detected temperature.

9. The method of any one of claims 1 and 3 to 8, or the computing system (100) of any one of claims 2 to 8, wherein the indication of an increase in loading of the GPU is detected from an increase in graphics scene complexity in the video.

10. The method of any one of claims 1 and 3 to 9, or the computing system (100) of any one of claims 2 to 9, wherein the indication of the loading of the GPU is detected from one or more of: an operating frequency of the GPU, a utilization rate of the GPU, and unstable FPS of the video.

11. The method of any one of claims 1 and 3 to 10, further comprising:
performing the AI SR operations according to a whitelist that specifies a configuration of a plurality of functions used in rendering a plurality of graphics scenes in the video; or
the computing system (100) of any one of claims 2 to 10, wherein the APU (113) is operative to perform the AI SR operations according to a whitelist that specifies a configuration of a plurality of functions used in rendering a plurality of graphics scenes in the video.
